# EUROPEAN PATENT SPECIFICATION

(11) **EP 0 904 918 B1**
(45) Date of publication and mention of the grant of the patent: **04.10.2006**
(21) Application number: 98120975.2
(22) Date of filing: 05.06.1996
(51) Int. Cl.: B29C 45/12, B29C 45/67

(54) **Injection molding machine with associated securing/clamping assembly**
Spritzgiessmaschine mit zugehörigem Befestigungs-/Spannzusammenbau
Machine à mouler par injection avec assemblage de fixation/serrage associé

(30) Priority: 07.06.1995 US 486600; 07.06.1995 US 482870; 07.06.1995 US 482869; 02.01.1996 US 582434
(43) Date of publication of application: 31.03.1999
(62) Divisional of application: 96109004.0
(73) Proprietor: HUSKY INJECTION MOLDING SYSTEMS LTD., Bolton Ontario L7E 5S5 (CA)
(72) Inventor: Kestle, Martin Richard, Everett, Ontario L0M 1J0 (CA); Choi, Christopher W.M., Richmond Hill, Ontario L4B 3Z9 (CA); Glaesener, Pierre, 7780 Bissen (LU)
(74) Representative: Dearling, Bruce Clive

(56) References cited:
- EP-A- 0 438 721
- WO-A-95/08428
- WO-A-96/41711
- FR-A- 2 256 828
- FR-A- 2 390 271
- GB-A- 2 064 415
- US-A- 2 711 561
- US-A- 2 976 569
- US-A- 5 417 913

## Description

### BACKGROUND OF THE INVENTION

This invention is directed to injection molding machines for use with the bars of both singular and tandem injection molding machines according to the preamble of claim 1.

The prior art includes many types of tie bar gripping and clamping assemblies for use with injection molding machines. The gripping of the bars via these assemblies allows for a high clamping force to be applied to the mold halves during injection molding. Typical tie bar gripping and mold clamping mechanisms are shown in the US-A 5,135,385; 5,275,550; 5,238,394 and 4,874,309. In each of these patents, a combination tie bar gripping mechanism mold clamping unit is disclosed wherein the tie bar is gripped via clamping devices moving transverse the longitudinal direction of the tie bars.

Accordingly, with reference to FIG. 5, the US-A- 5,275,550 discloses the use of hydraulic clamps 9 and 10 for engaging circular grooves 18 of tie bar 17 for gripping the tie bars prior to the application of a clamping pressure via separate hydraulic cylinders 7. Similarly, the US-A-4,874,309 discloses the use of halves 180 for clamping threads 172 of tie bar 164 so as to grip the tie bars prior to the application of a clamping force via separate hydraulic cylinders 160.

More particularly, the US-A- 5,135,385 discloses a clamping system which includes a fixed platen on one end of a machine base and a plurality of clamping cylinders wherein the fixed platen holds a fixed mold therein. A movable platen is fixed to the other end of the machine base and holds a movable mold therein, wherein a plurality of tie bars extend through the movable platen into the fixed platen. At one end of the tie bars, pistons are positioned wherein the pistons are slidably received within the clamping cylinders. In addition, the tie bars include screw threads or grooves on their end nearest the clamping cylinders. A unit is disposed between the movable platen and the fixed platen for moving the movable platen to and from the fixed platen. The movable platen includes two part nuts mounted therein for meshingly engaging additional screw threads or grooves positioned adjacent the end of the tie bar nearest the movable platen.

A further stopper mechanism is included in the movable platen which is engagable with recesses on the tie bars. The inner peripheral surfaces of the pistons include threads which are engageable with the screw threads or grooves on the tie bars adjacent the fixed platen. Accordingly, the pistons may be rotatable through means connected with a drive while engaged with the threads or grooves of the tie bars for adjusting the clamped position of the mold halves. Clamp position is adjusted by maintaining the female screw on the inner surface of the piston in meshed relationship with the screw portion at the end of the tie bar. By rotating the piston via a mechanism such as a sprocket and chain, the position of the mold halves can be adjusted as necessary. For this design, the threads on the inner surface of the piston are always maintained in meshed relationship with the threaded end of the tie bar and are used primarily for shut height adjustment.

The US-A- 5,238,394 discloses a mold clamping apparatus for a molding apparatus. The mold clamping apparatus includes a base, a fixed panel and a movable panel disposed on the base and respectively supporting mold halves. A plurality of tie bars each having a screw shaft at one end thereof pass through the movable panel toward the fixed panel. The plurality of clamping cylinders are disposed on the fixed panel for clamping another end of the tie bars when the mold apparatus is in a closed position. Each clamping cylinder includes cylinders 14 and semi-circular chucks 17 positioned transverse the longitudinal dimension of the tie bar. The cylinders 14 are actuated for gripping tie bar upon contact of the tie bar with a recess positioned in a primary piston of the clamping cylinder. Once cylinders 14 are engaged with tie bars 9, pressure can be applied to the primary piston 12 for providing the clamping force to the mold halves 25. The clamping apparatus further includes a mechanism for moving the movable panel towards and away from the fixed panel and an adjusting mechanism disposed on the movable panel, for simultaneously fixedly adjusting the axial position of the screws on the tie bar with respect to the movable panel so that molds of varying sizes can be accommodated. The secondary clamping pistons 14 and semi-circular chucks 17 are not rotatable into engagement with tie bars 9 and must be maintained in engagement with the tie bars during the application of pressure against primary cylinder 12.

The patents US-A- 3,183,555; 3,120,039 and 2,916,768 disclose further tie bar clamping mechanisms for use with molding machines. More particularly, US-A- 3,183,555 discloses an expendable sleeve or bush 15 which envelopes the outer surface of a tie bar. The sleeve is adapted to engage inner walls of bores provided in a closing platen 9, wherein the bushes are adapted to receive guide columns or tie bars 4, such that the closing platen 9 is held on the guide columns by frictional contact. The US-A- 3,120,039 discloses the use of cylinders 21 having pistons 23 which are connected to levers 25 which in turn function to operate clamping jaws 26 for gripping shafts or tie bars 1. The US-A- 2,916,768 discloses the use of pistons for operating claws which rotate to grasp mating claws of tie bars moving from a movable platen 4 to stationary platen 7. The jaws are located in the stationary platen. Finally, EP-C- 0 290 858 discloses the use of electromagnets 8 for clamping tie bar or column ends 7, for locking a movable tool clamping platen to a fixed tool clamping platen.

The US-A- 5,185,119; 4,090,837 and 3,707,342, disclose different embodiments of tandem molding machines, i.e., wherein each machine has more than one mold. However, none of the tandem machines include tie bar securing/clamping mechanisms as discussed above or as disclosed in the present invention.

US-A- 5,185,119 discloses an injection molding machine and method of operation having a plurality of accessory arrangements for molding a plurality of piece parts in efficient overlapping time cycle using primary and secondary molten plastic injection units, primary and secondary clamping units, and a plurality of injection units in various arrays including molding piece parts in reverse or uniform orientation. The tandem machine includes two fixed end platens and two center movable mold platens movable against and towards one of the fixed platens.

US-A- 3,707,342 discloses a tandem injection molding apparatus having two molds, spaced apart with a dual nozzle injection unit positioned between the molds to fill the two molds alternately. The cooling periods of the two closed molds overlap in time and while one mold is cooling the other one is opened, emptied of its molded part, closed again and injected with a new charge of plastic. During the cooling period of one mold, the injection unit not only injects plastic into the other mold bit also recharges for a new operating cycle. The machine includes a stationary side platen and movable center and other side platens.

UK patent application No. 8037289 describes a mold closing and locking arrangement in which segment-shaped outer dogs are formed at the ends of the column (or tie-bar).

DE-B-1 227 642 describes a molding machine having a lockable counter pressure plate that develops clamp pressure through mechanical bracing. Specifically, in a mold open position, expansion bolts are in a relaxed state and are thus inclined relative to the machine's main axis. To develop closure tonnage, these expansion bolts are forced to align with the machine's main axis, thereby moving an abutting ring element forward by a distance, d.

There exists, therefore, a need for improved single mold and tandem mold injection molding machines having an improved tie-bar securing/clamping assembly, wherein the securing/clamping assembly can be engaged and disengaged from the tie-bar at each molding cycle.

### SUMMARY OF THE INVENTION

The primary objective of this invention is to provide an improved tandem injection molding machine and single mold injection molding machine. Another object of this invention is to provide an improved tie-bar securing mechanism for use with both tandem and single mold injection molding machines. Still another object of this invention is to provide a securing/clamping assembly for use with both tandem and single mold injection molding machines which provides the dual purpose of securing with the tie bars and clamping mold halves closed for injection molding. A still another object of the invention is to provide an improved securing/clamping assembly for use in both securing tie bars and clamping mold halves for injection molding which is actuated via rotational movement.

In accordance with the present invention there is provided an injection molding machine comprising: a stationary platen supporting, in use, a first mold half; a movable platen movable relative to said stationary platen, the movable platen supporting, in use, a second mold half adapted to engage against said first mold half to form a mold; a plurality of tie-bars extending between and connecting said stationary platen and said movable platen, each tie-bar having an end section lockably engageable in a corresponding clamp assembly located on one of said stationary platen and said movable platen, each clamp assembly having: a rotatable sleeve assembly with an internal surface into which are located a plurality of axially displaced first rings of circumferentially spaced apart teeth, each first ring containing a plurality of teeth separated by slots aligned to form channels through the plurality of axially displaced first rings of teeth, the first rings of teeth arranged selectively, upon rotation of the rotatable assembly, to positively engage a plurality of axially displaced second rings of circumferentially spaced apart teeth on the end section of each tie-bar, each second ring containing a plurality of teeth separated by slots that align within the plurality of axially displaced second rings of teeth to form axial channels therethrough, the first rings of teeth further arranged upon selective rotation of the rotatable assembly to disengage from said plurality of axially displaced second rings of spaced teeth to allow relative axial movement between each tie-bar and its respective clamp assembly by allowing the teeth in the first rings to move through and within slots between teeth in the second rings, whereby the tie bar, in use, passes through the sleeve and is engaged by rotation of the sleeve; wherein: positive engagement occurs, in use, between the plurality of axially displaced rings on both the end section and within the rotatable sleeve assembly; the plurality of axially displaced ring of teeth are arranged to support a plurality of different shut heights for the injection molding machine; and the rings of teeth are displaced from one another by a pitch; characterized in that: the rotatable sleeve assembly is configured as a piston having a total available travel that is at least the sum of: i) the pitch; ii) a clearance measure between rings of teeth in the rotatable sleeve assembly and the tie-bar; and iii) a maximum elongation of the tie bar under applied clamp force.

Preferred embodiments are defined in the dependent claims.

The details of the present invention are set out in the following description and drawings wherein like reference characters depict like elements.

### BRIEF DESCRIPTION OF THE DRAWINGS

FIG. 1 is a simplified overhead view of a tandem injection molding machine having securing/clamping assemblies in accordance with the principles of the present invention;
FIG. 2 is an elevational view of the tandem injection molding machine shown in FIG. 1;
FIG. 3A is a detailed cross-sectional view of a securing/clamping assembly for use with the injection molding machine according to the principles of the present invention, showing engaged teeth in the upper half and disengaged teeth in the lower half, taken along the line 3A-3A of FIGs, 6A and 6B;
FIG. 3B is a partially cross-sectional end view of a securing/clamping assembly used with the injection molding machine according to the principles of the present invention, taken along line 3B-3B of FIG. 3A'
FIG. 4 is an end view of the injection molding machine shown in FIG. 1 in accordance with the principles of the present invention and showing the securing/clamping assemblies and rotational mechanism therefor;
FIG. 5 is an elevational view of a single mold injection molding machine in accordance with the principles of the present invention;
FIG. 6A is an enlarged view of the rotational mechanism shown in FIG. 4 in the disengaged position;
FIG. 6B is an enlarged view of the rotational mechanism shown in FIG. 4 in the engaged position;

### DETAILED DESCRIPTION OF THE PREFERRED EMBODIMENT

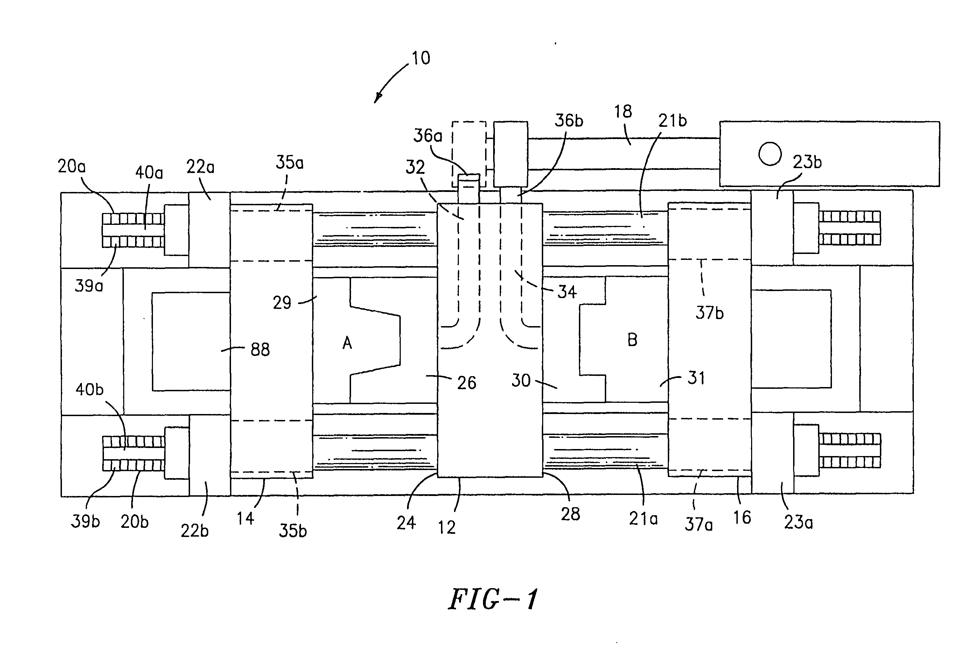

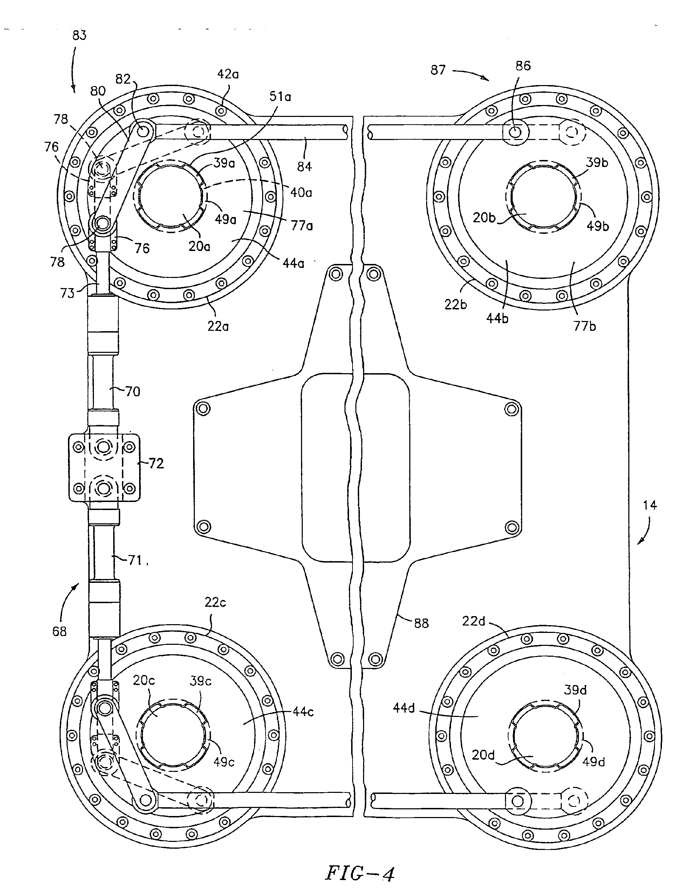

Referring now to the drawings in detail, there is shown in FIG. 1, a simplified top view of a tandem injection molding machine designed in accordance with the principles of the present invention and designated generally as 10. Machine 10 generally includes a fixed center platen 12, a movable end platen 14, a movable end platen 16, an injection unit 18, tie bars 20a-20d (20c and 20d shown in FIG. 4), 21a-21d (21c and 21d not shown) for guiding the movable platens and securing/clamping assemblies 22a-22d (22c and 22d shown in FIG. 4) and 23a-23d (23c and 23d not shown).

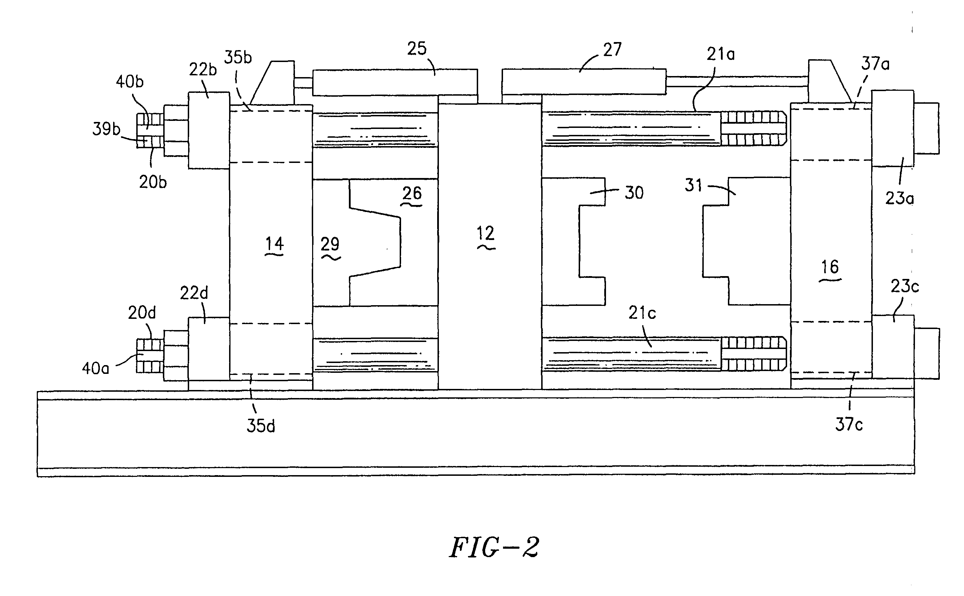

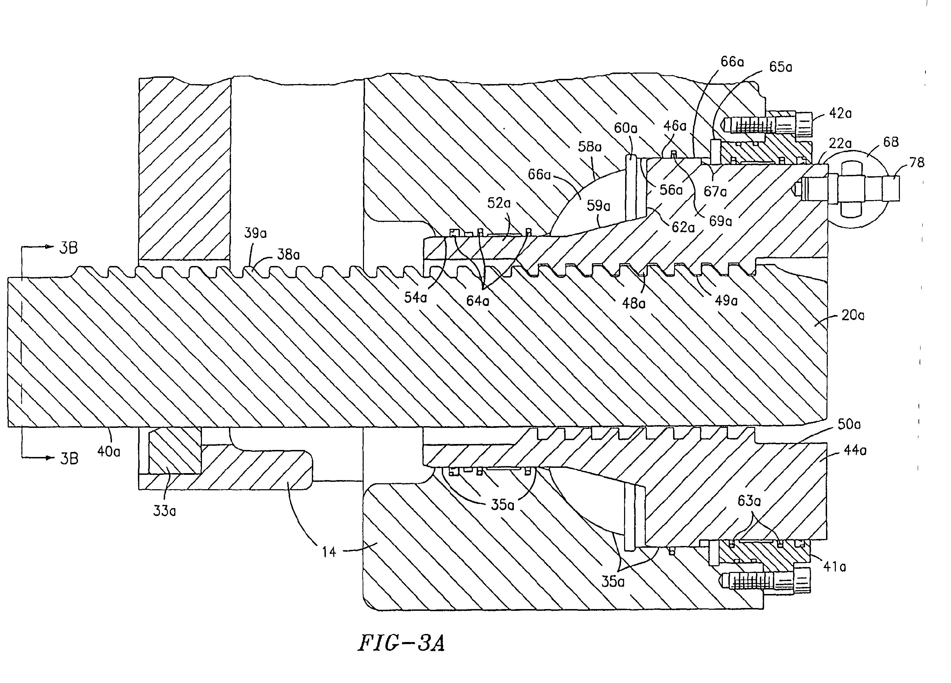

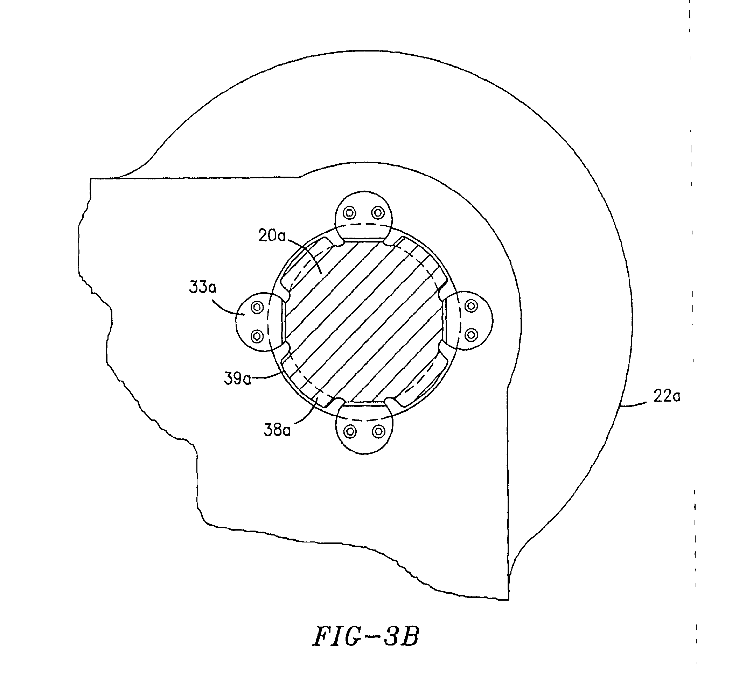

Center platen 12 is fixed to a base and movable end platens 14 and 16 are movable away from and toward center platen 12 via positioning cylinders 25 and 27, respectively, is as shown in FIG. 2. Center platen 12 includes a molding side 24 having a first stationary mold half 26 and a molding side 28 including a second stationary mold half 30. In addition, center stationary platen 12 includes a first hot runner 32 for directing melt to first stationary mold half 26 and a second hot runner 34 for directing melt to the second stationary mold half 30. Locking flanges 36a and 36b extend from the side of the fixed center platen for alternating engagement with injection unit 18. Alternatively, a single fixed connection could be used with a distribution valve to feed resin to either side of the center platen and respective mold. Movable platens 14 and 16 each include a movable mold half 29 and 31, respectively, for forming molds upon closing with stationary mold halves 26 and 30, respectively.
Referring to FIG. 1, and FIG. 2 showing an elevational view of machine 10 shown in FIG. 1, tie bars 20a-20d (20c not shown) extend from fixed center platen 12 toward movable end platen 14 and four tie bars 21a-21d (21d not shown) extend from fixed center platen 12 toward movable end platen 16. Tie bars 20a-20d and 21a-21d are arranged at the corners of the fixed center platen 12 such that when the mold is closed, they extend through securing/clamping assemblies 22a-22d (22c not shown) and 23a-23d (23d not shown), respectively, carried by, or within the movable end platens 14 and 16, respectively. The tie bars are preferably stationary while the movable platens move relative thereto and are supported on guide shoes, shoe 23a shown in FIG. 3A.

Each of end platens 14 and 16 include four bores shown by dotted lines in FIGS. 1 and 2, 35a-35d (35c not shown) and 37a-37d (37d not shown), respectively, in which clamping and securing assemblies 22a-22d and 23a-23d, respectively, extend. Movable platen 14 and 16 preferably include fasteners, shown in FIG. 4, on the outwardly facing surface thereof for the securement of the securing/clamping assemblies, respectively.

The securing/clamping assemblies function to both grip or engage the tie bars and apply pressure to the mold halves during mold injection. Accordingly, from a general standpoint, each of the securing/clamping assemblies 22a-22d and 23a-23d include a mechanism for securely and positively engaging the tie bar, wherein the mechanism is further capable of conveying pressure to the platens for forcing the mold halves together during injection molding. Preferably each securing/clamping assembly is formed from a body member having a structure which is movable as a single unit for securing with the tie bars and applying clamping pressure between the platens.

All of the securing/clamping assemblies, bores, and the tie bars are substantially the same and accordingly, only one securing/clamping assembly 22a, bore 35a and tie bar 20a are described in detail along with their associated elements, unless specifically provided, it being understood that the description applies equally to securing/clamping assemblies 22b-22d, bores 35b-35d and tie bars 20b-20d and associated elements.

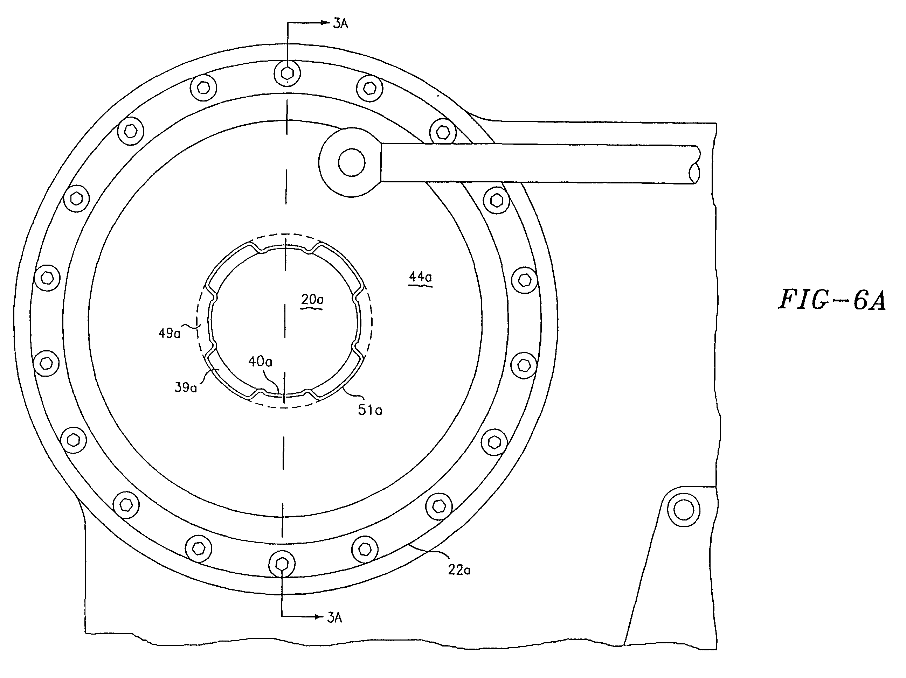

In a particular embodiment of the securing/clamping assemblies, securing/clamping assembly 22a is mounted on the outwardly facing side of movable end platen 14 and within bore 35a as shown in FIGS. 1, and as discussed above. Referring to FIGS. 3A and 3B, in order for the securing/clamping assembly 22a of platen 14 to function with tie bar 20a, tie bar 20a includes an elongated end section having a plurality of spaced protrusions in the form of teeth 38a separated by longitudinally extending outer slots 40a, as shown in FIG. 4 and in more detail in FIG. 6A for the bar 20a. Accordingly, at the end of tie bar 20a is a toothed outer surface, as shown in FIG. 3A. The toothed outer surface of tie bar 20a is in the form of longitudinal outer strips of teeth 39a extending in the axial direction of the tie bar, wherein the teeth 38a are preferably aligned in a radial direction on the tie bar and separated by a space in the axial direction. Each of the strips of teeth such as strips of teeth 39a is radially separated from another strip of teeth via an outer axially extending slot, such as outer slots 40a as shown in FIG. 4. Outer strips of teeth 39a and slots 40a of tie bar 20a are adapted to engage and align, respectively, with inner teeth and grooves of securing/clamping assembly 22a, discussed below, in order to cause a locking engagement with the bar 20a.

Securing/clamping assembly 22a is positioned in bore 35a and is secured therein via retaining ring 41a and fasteners 42a, as shown in FIG. 3A. Securing/clamping assembly 22a is comprised of a member in the form of a piston 44a adapted to be positioned in bore 35a and coaxially relative to a tie bar 20a, as shown in FIGS. 3A and 3B. Piston 44a includes an outer surface 46a and an inner surface with axially extending teeth 48a separated by spaces in the axial direction, which are adapted to engage teeth 38a of the strips of teeth 39a of tie bars 20a. A slight axial clearance is provided between the teeth 38a of tie bars 20a and the inner teeth 48a of toothed piston 44a to allow for relative movement and position error adjustment during engagement of the teeth.

In FIG. 3A, the top half of the figure shows locking engagement of teeth 38a of tie bar 20a with inner teeth 48a of piston 44a, and the clearance, represented by dotted lines in FIG. 4, while the bottom half shows non-engagement. Inner teeth 48a are included in a plurality of equally radially spaced and axially extending inner strips of teeth, such as 49a, which are radially separated from each other by inner slots 51a, as shown in FIG. 6A and axially separated by a space.

In order to achieve relative motion between securing/clamping assembly 22a and tie bar 20a, outer strips of teeth 39a of tie bar 20a are less in radial width than inner slots 51a of piston 44a and outer slots 40a of tie bar 20a are greater in radial width than inner strips of teeth 49a of piston 44a, thus allowing sufficient space for axial movement therebetween. During engagement or disengagement of strips of teeth 39a with strips of teeth 49a, teeth 38a do not extend into the entire depth of the spaces between inner teeth 48a or slots 51a, respectively, thereby leaving a clearance between the teeth and piston bore. A clearance also preferably exists between teeth 48a and the innermost surfaces of tie bar 20a, i.e. the surfaces defined by the spaces between teeth 38a or the surface of slots 40a.

Outer surface 46a of piston 44a has a stepped shape preferably including a base portion 50a having a wider diameter than a neck portion 52a. Bore 35a is shaped to closely receive piston 44a at the base and neck portion. Accordingly, bore 35a has a smaller bore portion 54a having a diameter only slightly greater than the diameter of neck portion 52a and larger bore portion 56a having a diameter only slightly greater than the diameter of base portion 50a of piston 44a. Smaller bore portion 54a and larger bore portion 56a are circular in shape and are separated by an intermediate bore portion 58a having a hemispherical, tapered, stepped or other type of shape, the choice of which is not critical. Intermediate bore portion 58a begins at smaller bore portion 54a, expanding outwardly to its maximum diameter just prior to larger bore portion 56a. The maximum diameter of intermediate bore portion 58a is less than the outside diameter of larger bore portion 56a, and base portion 50a of piston 44a. Accordingly, a face 60a is formed between intermediate bore portion 58a and larger bore portion 56a against which axially transverse surface 62a of piston 44a can abut.

Referring still to FIGS. 3A and 3B, seals 64a are provided between smaller bore portion 54a and neck portion 52a and seal 69a is provided between larger bore portion 56a and base portion 50a of piston 44a. Intermediate bore portion 58a is accordingly greater in diameter than the transitional area 59a between base portion 50a and neck portion 52a, defined in part by axially transverse surface 62a, of piston 44a. Accordingly, free space 66a is provided between bore 35a and piston 44a in the vicinity of the intermediate bore portion 58a. This space 66a is appropriately sealed via seals 64a and 69a, for the introduction of pressurized air, hydraulic or other fluid in order to provide a clamping pressure against surface 62a of piston 44a for pressing the movable platen 14 against the fixed center platen 12 during injection molding. Additional seals 63a are preferably provided between retaining ring 41a and piston 44a. Clamping pressure is released by releasing hydraulic pressure from space 66a and applying hydraulic fluid under pressure in cavity 65a against surface 67a of piston 44a. Before pressure is applied in space 66a against surface 62a so as to force movable platen 14 against the fixed center platen 12, inner strips of teeth 49a of piston 44a should first be engaged with outer strips of teeth 39a of tie bar 20a. Such locking engagement, and disengagement, of inner strips 49a with outer strips of teeth 39a is accomplished via rotational mechanism 68, shown in FIG. 4.

Rotational mechanism 68 is used for rotating securing/clamping assemblies 22a-22d and is substantially the same as the rotational mechanism (not shown) used with securing/clamping assemblies 23a-23d. Accordingly, only rotational mechanism 68 is described in detail, it being understood that the description applies equally to the rotational mechanism used with securing/clamping assemblies 23a-23d.

As shown in the end view of FIG. 4 where securing/clamping assemblies 22a-22d are shown positioned in movable platen 14, rotational mechanism 68 is preferably in the form of a linkage assembly which extends between and is connected to all four securing/clamping assemblies 22a-22d on the movable end platen 14. Rotational mechanism 68 specifically connects securing/clamping assemblies 22a and 22b and securing/clamping assemblies 22c and 22d. The linkage assembly of rotational mechanism 68 includes one or more, preferably a pair, of piston/cylinder mechanisms 70 and 71 attached to bracket 72 between two of the securing/clamping 20 assemblies, i.e. securing assemblies 22a and 22c.

Both piston/cylinder mechanisms 70 and 71 and associated linkage are substantially the same and accordingly only one piston/cylinder assembly 70 and associated linkage will be described in detail, it being understood that the description applies equally to assembly piston/cylinder assembly 71 wherein assembly 71 is substantially the mirror image of assembly 70.

The non-moving end of piston/cylinder assembly 70 is pivotally attached to bracket 72 and piston rod end 73 of piston cylinder assembly 70 extends toward securing/clamping assemblies 22a-22b.

Piston rod 73 extends from piston/cylinder assembly 70 and is attached via a bearing assembly 76 to the end surface 77a of piston 44a. Linkage arm 80 is attached to bearing assembly 76 which pivots about stud 78 fastened to end surface 77a. Linkage arm 80 traverses a portion of end surface 77a of piston 44a and is connected at another stud 82 on end surface 77a. Studs 78 and 82 are preferably spaced from each other on the end surface 77a of piston 44a, approximately 900. Stud 78 is preferably positioned on the outer side 83 of the vertical centerline of securing/clamping assembly 22a. A second linkage arm 84 extends from stud 82 which connects securing/clamping assemblies 22a and 22b and is attached to the end surface 77b of piston 44b. Linkage arm 84 is pivotally attached to securing/clamping assembly 22b at a stud 86, wherein stud 86 is positioned on securing/clamping assembly 22b adjacent the outer side 87 of the vertical centerline of securing/clamping assembly 22b.

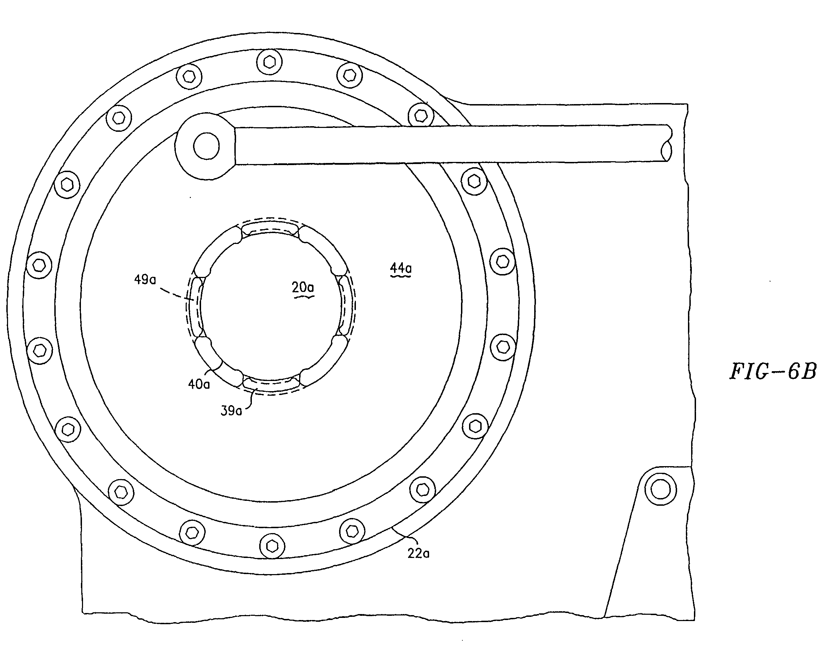

The dotted lines in FIG. 4 indicate movement of rotational mechanism 68 upon the actuation of piston/cylinder assemblies 70 and 71. The solid lines show the pistons in the unextended position with the inner strips of teeth 49a-49d of the pistons 44a-44d being unengaged with outer strips of teeth 39a-39d of tie bars 20a-20d. The dotted lines of the securing/clamping assemblies also show the inner strips of teeth 49a-49d of pistons 44a-44d engaged with the outer strips of teeth 39a-39d of tie bars 20a-20d. This engagement and disengagement is shown in more detail in FIGS. 6A and 6B, where FIG. 6A shows the securing/clamping assembly 22d in the disengaged position, i.e. strips of teeth 39d and 49d enmeshed and FIG. 6B shows the securing/clamping assembly 22d in the engaged position with strips teeth 39d and 49d meshed. Accordingly, upon simultaneous actuation of piston/cylinder assemblies 70 and 71, inner strips of teeth 49a-49d, securing/clamping assemblies 22a-22d, respectively, can be synchronously engaged and disengaged with outer strips of teeth 39a-39d of tie bars 20a-20d, respectively, so as to lock movable platens 14 and 16 into substantially closed positions prior to the application of the desired clamping force via pressure against surfaces 62a-62d (shown in FIG. 3; 62b-62d not shown), of pistons 44a-44d (44b-44d not shown).

The total available travel of piston 44a is at least the total of the pitch of the strips of teeth plus the clearance plus the maximum elongation of the tie bars. This allows shut height to be adjusted to any point between maximum and minimum even though engagement between tie bar teeth and piston teeth is of a fixed pitch.

While the rotational mechanism 68 has been described in detail as a linkage assembly, it is to be understood, that other types of rotational mechanisms can be used such as, for example, sprockets, belts and chains, directly synchronized drives, and rack and pinion assemblies.

While the securing/clamping assemblies 22a-22d of the present invention have been described for use with a tandem injection molding machine having a fixed center platen and two movable end platens, the securing/clamping assemblies are by no means limited to such use. Assemblies 22a-22d can be incorporated in a manner similar to as described above for tandem type machines having a fixed end platen and movable platens movable toward the fixed end platen. Use of the securing/clamping assemblies is also feasible and contemplated for other variations of tandem machines.

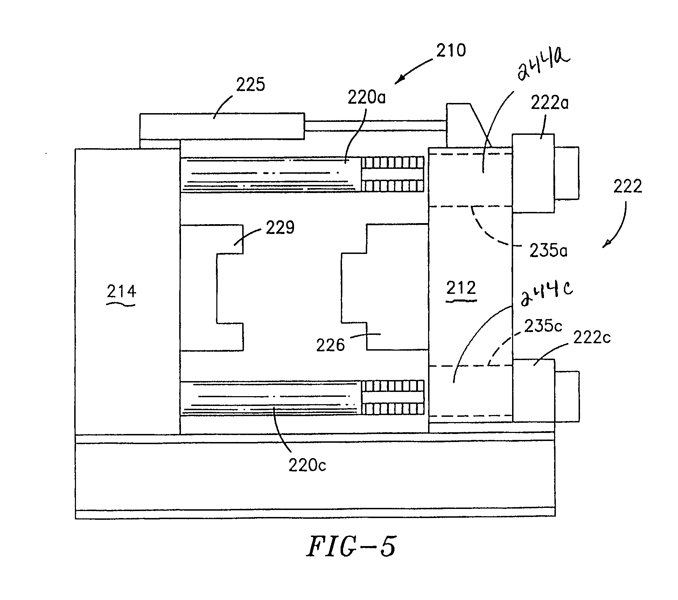

Further, the securing/clamping assemblies can be equally used with a non-tandem machines 210, as shown in FIG. 5, i.e. injection molding machines having a single stationary mold platen 214 and one movable platen 212 or any other variation thereof. Accordingly, FIG. 5 is indicative of the use of the securing/clamping assemblies 22a-22d, therein assemblies 222, of the present invention with a non-tandem machine 210. The above description of the securing/clamping assemblies, rotational mechanisms, and the additional parts of the injection molding machine, are equally applicable to a non-tandem machine and is incorporated herein. Alternatively, assemblies 222 can be mounted on fixed platen 214 and tie bars attached to moving platen 212. ,

Referring now to FIGS. 1-6 the operation of the injection molding machine 10 in accordance with the principles of the present invention will be described.

In operation of tandem machine 10 shown in FIGS. 1 and 2, rotational mechanism 68 for at least one of movable platen 14 and 16, as shown in FIG. 4, is set such that the plurality of securing/clamping assemblies 22a-22d and 23a-23d, respectively, are unengaged with tie bars 20a-20d and 21a-21d, respectively, i.e. wherein the slots of the tie bars and securing/clamping assemblies are in alignment with the teeth of the securing/clamping assemblies and tie bars, respectively, thus allowing movement of one of movable platens 14 and 16 relative the tie bars and center fixed platen 12, as shown in FIG. 6A. By way of example only, movable platen 14 is first moved into the mold closed position, as shown in FIG. 2, while movable platen 16 remains in a mold open position, as also shown in FIG. 2. In achieving the mold closed position of the mold halves 26 and 29, as shown in FIG. 2, movable mold half 29 is moved via positioning cylinder 25 into engagement with first stationary mold half 26. In addition, injection unit 18 is locked in engagement with locking flange 36a of first hot runner 32, as shown by the dotted lines of FIG. 1 or alternatively, a distribution valve is used to direct flow to mold halves 26 and 29. Accordingly, during movement of movable end platen 14, rotational mechanism 68 for movable platen 14 is in the position as shown by the solid lines in FIG. 4 and securing/clamping assemblies 22a-22d are movable relative to tie bars 20a-20d, respectively.

When first stationary mold half 26 and first movable mold half 29 are in the position shown in FIGS. 1 and 2, rotational mechanism 68 is actuated via piston/cylinder assembly 70 and 71 such that the inner strips of teeth 49a-49d of pistons 44a-44d are rotated into engagement with outer strips of teeth 39a-39d of tie bars 20a-20d, respectively.

The initial position of the mold halves is achieved by moving the movable platen in a stepwise manner until strips of teeth 39a-39d and 49a-49d are respectively in position for engagement. The engaged position of the securing/clamping assemblies 22a-22d is represented by the dotted line shown in FIG. 4. Such engagement of outer strips of teeth 39a-39d of tie bars 20a-20d with inner strips of teeth 49a-49d of pistons 44a-44d is also represented in the upper half of FIG. 3A for assembly 22a and in FIG. 6B for assembly 22d.

With the inner strips of teeth 49a-49d engaged with outer strips of teeth 39a-39d, respectively and the first stationary mold half 26 being positioned in molding engagement with first movable mold half 29 (as shown in FIG. 1), pressure can be applied to the mold halves via securing/clamping mechanisms 22a-22d.

The hydraulic pressure against surface 62a-62d forces first stationary mold half 26 and first movable mold half 29 sealably together in preparation for injection molding. As force between the mold halves is maintained via each securing/clamping assemblies 22a-22d, melt is injected via injection unit 18 through first hot runner 32 for facilitating molding. Once injection molding is complete hydraulic pressure is reduced in cavities 66 for the unclamping of the molds.

After decompression, securing/clamping assemblies 22a-22d are used to break the mold. Pistons 44a-44d are maintained in engagement with tie bars 20a-20d and securing/clamping assemblies are powered in the backward direction by pressurized fluid against surfaces 67a-67d (67b-67d not shown) of pistons 44a-44d, as shown in FIG. 3A. Preferably, the axial clearance G between the engaged teeth of piston 44 and tie bar 20 is as the free space for initially breaking the mold halves apart.

Once mold break is completed, the teeth of pistons 44a-44d are rotated out of engagement with the teeth of tie bars 20a-20d via rotational mechanism 68. Once this disengagement of the teeth has been accomplished, positioning cylinder 25 is operable to move first movable mold half 29 away from first stationary mold half 26 so that the molded unit may be ejected by the ejection system 88, shown schematically in FIG. 1, the design of which is known in the art. In preparation for the subsequent clamping sequence, pistons 44 are required to be repositioned to the home or starting position.

Repositioning may take place as long as pistons 44a-44d are disengaged from tie bars 20a-20d. Repositioning may begin even if mold opening is not complete. Semi-simultaneous repositioning or sequential repositioning may be used for repositioning pistons 44a-44d.

For the tandem machine 10 as shown in FIG. 1, as securing/clamping assemblies 22a-22d are released and movable mold half 29 is moved to the open position, the other movable mold half 31 is closed via cylinder 27, and clamped via securing/clamping assemblies 23a-23d, via the same operation as discussed above for mold halves 26 and 29 and securing/assemblies 22a-22d. Injection unit 18 is moved into locking engagement with locking clamps 36 of second hot runner 34, or valve direction is changed for injecting melt and forming a molded unit in mold halves 30 and 31. The securing/clamping assemblies 23a-23d (23c and 23d not shown) are designed and function in the same manner as described above and are repositioned in the same manner as described above.

Mold halves 26, 29 and 30, 31 can be opened, closed, clamped and unclamped independently of each other. Each side of stationary platen 12 can be operated as a completely independent machine or they can be coordinated and synchronized in any one of a number of ways.

FIG. 5 shows a single mold injection molding machine wherein numerals similar to those used for machine 10 describe similar elements and are not described in detail here, wherein reference is made to the preceding description. Machine 210 includes stationary platen 214 and one movable platen 212. Injection molding machine 210 includes securing/clamping assemblies 222, similar to as described above for the tandem machine, in movable platen 212 and is designed and functions the same as described above with regard to securing/clamping assemblies 22, tie bars 20 and rotating mechanism 68, except that only one set of securing/clamping assemblies, tie bars, and one rotating mechanism is used.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within the scope as defined by the appended claims.

## Claims

1. An injection molding machine (10) comprising:
a stationary platen (12) supporting, in use, a first mold half (26, 30);
a movable platen (14, 16) movable relative to said stationary platen, the movable platen (14, 16) supporting, in use, a second mold half (29, 31) adapted to engage against said first mold half (26, 30) to form a mold;
a plurality of tie-bars (20a-20d) extending between and connecting said stationary platen (12) and said movable platen (14, 16), each tie-bar (20a-20d) having an end section lockably engageable in a corresponding clamp assembly (22a-22d) located on one of said stationary platen and said movable platen, each clamp assembly (22a-22d) having:
a rotatable sleeve assembly (44a-44d) with an internal surface into which are located a plurality of axially displaced first rings of circumferentially spaced apart teeth (48a), each first ring containing a plurality of teeth separated by slots aligned to form channels through the plurality of axially displaced first rings of teeth, the first rings of teeth arranged selectively, upon rotation of the rotatable assembly to positively engage a plurality of axially displaced second rings of circumferentially spaced apart teeth (38a, 39a) on the end section of each tie-bar (20a-20d), each second ring containing a plurality of teeth separated by slots (40a) that align within the plurality of axially displaced second rings of teeth to form axial channels therethrough, the first rings of teeth further arranged upon selective rotation of the rotatable assembly to disengage from said plurality of axially displaced second rings of spaced teeth (38a, 39a) to allow relative axial movement between each tie-bar (20a-20d) and its respective clamp assembly (22a-22d) by allowing the teeth in the first rings (48a) to move through and within slots (40a) between teeth in the second rings (38a, 39a), whereby the tie bar (20a-20d), in use, passes through the sleeve and is engaged by rotation of the sleeve;
wherein:
positive engagement occurs, in use, between the plurality of axially displaced rings on both the end section and within the rotatable sleeve assembly (44a-44d);
the plurality of axially displaced ring of teeth (38a, 39a, 48a) are arranged to support a plurality of different shut heights for the injection molding machine; and
the rings of teeth are displaced from one another by a pitch;
**characterized in that**:
the rotatable sleeve assembly (44a-44d, 48) is configured as a piston having a total available travel that is at least the sum of: i) the pitch; ii) a clearance measure between rings of teeth (38a, 39a, 48a) in the rotatable sleeve assembly (44a-44d) and the tie-bar (20a-20d); and iii) a maximum elongation of the tie bar (20a-20d) under applied clamp force.

2. The injection molding machine according to claim 1, wherein the piston has a neck portion (52a) of relatively small external diameter and a base portion (50a) of relatively large external diameter, the neck portion (52a) coupled to the base portion by a transitional area (59a) and wherein an internal surface of the piston, juxtaposed in use said respective tie-bar, supports said first rings of spaced teeth, the base portion (50a) having:
a first axially transverse surface (62a), located adjacent the transition area (59a), arranged to bear, in use, a mold closure pressure from a pressurized fluid applied incident thereto; and
a second axially transverse surface (67a), located toward an end of the base portion (50a) further remote from the neck portion (52a) than the transition area (59a), arranged to bear, in use, a mold break force generated, in use, by a pressurized fluid applied incident thereto.

3. The injection molding machine (10) according to claim 2, wherein each clamp assembly (22a-22d) is located within a bore in a platen, the bore cooperating with the piston (44a-44d) to define:
a first cavity (66a) defined by the first axially transverse surface (62a) and the transition area (59a); and
a second cavity (65a) adjacent to the second axially transverse surface (67a).

4. The injection molding machine (10) according to claim 1, further comprising a piston assembly (70, 71, 73) and at least one associated linkage arm (80, 84) coupled to at least two clamp assemblies (22a-22d), the linkage arm (80, 84) cooperating with the piston assembly (70, 71, 73) to cause, in use, rotation of the sleeve to engage and disengage the rings of spaced teeth of the end section and the rotatable assembly.

5. The injection molding machine (10) according to claim 4, wherein the piston assembly (70, 71, 73) and said at least one associated linkage arm (80, 84) synchronize a plurality of clamp assemblies simultaneously.

6. The injection molding machine (10) according to any preceding claim, wherein a gap between adjacent rings of teeth is greater than a width of a ring teeth that fit within this gap.

7. The injection molding machine (10) according to any preceding claim, further comprising a mechanism for developing and conveying pressure to the mold during injection molding, the mechanism active in response to positive engagement of the first ring of spaced teeth with the second ring of spaced teeth.

8. The injection molding machine according to any preceding claim, wherein the injection molding machine is a tandem machine supporting a plurality of molds.

## Patentansprüche

1. Spritzgießmaschine (10) mit:
einer stationären Platte (12), die im Betrieb eine erste Formhälfte (26, 30) abstützt;
einer bewegbaren Platte (14, 16), die relativ zur stationären Platte bewegbar ist, wobei die bewegbare Platte (14, 16) im Betrieb eine zweite Formhälfte (29, 31) abstützt, die so ausgebildet ist, daß sie mit der ersten Formhälfte (26, 30) zur Bildung einer Form in Eingriff versetzbar ist;
einer Vielzahl von Spannstangen (20a-20d), die sich zwischen der stationären Platte (12) und der bewegbaren Platte (14, 16) erstrecken und diese verbinden, wobei jede Spannstange (20a-20d) einen Endabschnitt aufweist, der in einer zugeordneten Klemmvorrichtung (22a-22d) verriegelbar ist, die auf der stationären Platte oder auf der bewegbaren Platte vorgesehen ist, wobei jede Klemmvorrichtung (22a-22d) aufweist:
eine drehbare Buchsenanordnung (44a-44d) mit einer Innenfläche, in der eine Vielzahl von axial versetzten ersten Ringen von in Umfangsrichtung beabstandeten Zähnen (48a) vorgesehen ist, wobei jeder erste Ring eine Vielzahl von Zähnen aufweist, die durch Schlitze getrennt sind, die ausgerichtet sind, um Kanäle durch die Vielzahl von axial versetzten ersten Zahnringen zu bilden, wobei die ersten Zahnringe selektiv angeordnet sind, um bei einer Drehung der drehbaren Anordnung mit einer Vielzahl von axial versetzten zweiten Ringen von in Umfangsrichtung beabstandeten Zähnen (38a, 39a) an dem Endabschnitt jeder Spannstange (20a-20d) formschlüssig in Eingriff zu kommen, wobei jeder zweite Ring eine Vielzahl von durch Schlitze (40a) getrennten Zähnen aufweist, die innerhalb der Vielzahl von axial versetzten zweiten Zahnringen ausgerichtet sind, um axiale Kanäle durch diese hindurch zu bilden, wobei die ersten Zahnringe ferner so ausgebildet sind, daß sie bei selektiver Drehung der drehbaren Anordnung von der Vielzahl von axial versetzten zweiten Zahnringen (38a, 39a) gelöst werden, um eine relative Axialbewegung zwischen jeder Spannstange (20a-20d) und ihrer zugeordneten Klemmvorrichtung (22a-22d) zu gestatten, indem die Zähne der ersten Ringe (48a) sich durch und innerhalb der Schlitze (40a) zwischen den Zähnen der zweiten Ringe (38a, 39a) bewegen können, wobei die Spannstange (20a-20d) im Betrieb durch die Buchse verläuft und durch Drehung der Buchse in Eingriff kommt;
**dadurch gekennzeichnet, daß**:
im Betrieb ein formschlüssiger Eingriff zwischen der Vielzahl von axial versetzten Ringen sowohl am Endabschnitt als auch innerhalb der drehbaren Buchsenanordnung (44a-44d) auftritt;
die Vielzahl von axial versetzten Zahnringen (38a, 39a, 48a) so ausgebildet ist, daß sie eine Vielzahl von verschiedenen Verschlußhöhen der Spritzgießmaschine unterstützen; und
die Zahnringe voneinander durch eine Teilung versetzt sind;
**dadurch gekennzeichnet, daß**:
die drehbare Buchsenanordnung (44a-44d, 48) als Kolben ausgebildet ist, der einen Gesamtweg zur Verfügung hat, welcher zumindest die Summe von i) der Teilung; ii) eines Spielmaßes zwischen den Zahnringen (38a, 39a, 48a) in der drehbaren Buchsenanordnung (44a-44d) und der Spannstange (20a-20d); und iii) einer maximalen Verlängerung der Spannstange (20a-20d) unter der aufgebrachten Klemmkraft ist.

2. Spritzgießmaschine nach Anspruch 1, bei welcher der Kolben einen Halsteil (52a) von relativ kleinem Außendurchmesser und einen Basisteil (50a) von relativ großem Außendurchmesser hat, wobei der Halsteil (52a) mit dem Basisteil über eine Übergangszone (59a) gekuppelt ist, und wobei eine Innenfläche des Kolbens, die im Betrieb der entsprechenden Spannstange gegenüberliegt, die ersten Zahnringe abstützt, wobei der Basisteil (50a) aufweist:
eine erste axial quer verlaufende Fläche (62a), die nahe der Übergangszone (59a) liegt und so ausgebildet ist, daß sie im Betrieb eine Formschließkraft aus einem Druckfluid aufnimmt, das auf die Fläche einwirkt; und
eine zweite axial quer verlaufende Fläche (67a), die nahe einem Ende des Basisteiles (50a) angeordnet ist, der von dem Halsteil (52a) weiter entfernt als die Übergangszone (59a) liegt, und die so ausgebildet ist, daß sie im Betrieb eine Formaufbrechkraft erzeugt, die durch einen auf diese Fläche ausgeübten Fluiddruck hervorgerufen wird.

3. Spritzgießmaschine (10) nach Anspruch 2, bei welcher jede Klemmvorrichtung (22a-22d) innerhalb einer Bohrung in einer Platte angeordnet ist, wobei die Bohrung mit dem Kolben (44a-44d) zusammenwirkt, um zu definieren:
einen ersten Hohlraum (66a), der durch die erste axial quer verlaufende Fläche (62a) und die Übergangszone (59a) definiert ist; und
einen zweiten Hohlraum (65a), der nahe der zweiten axial quer verlaufenden Fläche (67a) liegt.

4. Spritzgießmaschine (10) nach Anspruch 1, die ferner eine Kolbenanordnung (70, 71, 73) und zumindest einen zugeordneten Lenkerarm (80, 84) aufweist, der mit zumindest zwei Klemmvorrichtungen (22a-22d) gekuppelt ist, wobei der Lenkerarm (80, 84) mit der Kolbenanordnung (70, 71, 73) zusammenwirkt, um im Betrieb eine Drehung der Buchse zu bewirken, um die Ringe von beabstandeten Zähnen des Endabschnittes und der drehbaren Anordnung in Eingriff und außer Eingriff zu bringen.

5. Spritzgießmaschine (10) nach Anspruch 4, bei welcher die Kolbenanordnung (70, 71, 73) und der zumindest eine Lenkerarm (80, 84) eine Vielzahl von Klemmvorrichtungen gleichzeitig synchronisieren.

6. Spritzgießmaschine (10) nach einem der vorhergehenden Ansprüche, bei welcher der Spalt zwischen benachbarten Zahnringen größer als die Breite eines Zahnringes ist, der in diesen Spalt paßt.

7. Spritzgießmaschine (10) nach einem der vorhergehenden Ansprüche, die ferner einen Mechanismus zum Erzeugen und Übertragen eines Druckes auf die Form während der Spritzgießformung aufweist, wobei der Mechanismus in Abhängigkeit von einem Formschlußeingriff des ersten Zahnringes mit dem zweiten Zahnring aktiv wird.

8. Spritzgießmaschine nach einem der vorhergehenden Ansprüche, bei welcher die Spritzgießmaschine eine Tandemmaschine ist, die eine Vielzahl von Formen abstützt.

## Revendications

1. Machine de moulage par injection (10) comprenant :
un plateau fixe (12) supportant, en fonctionnement, une première moitié de moule (26, 30) ;
un plateau mobile (14, 16), mobile par rapport audit plateau fixe, le plateau mobile (14, 16) supportant, en fonctionnement, une seconde moitié de moule (29, 31) adaptée pour s'engager contre ladite première moitié de moule (26, 30) pour former un moule ;
une pluralité de colonnes de guidage (20a-20d) s'étendant entre et reliant ledit plateau fixe (12) et ledit plateau mobile (14, 16), chaque colonne de guidage (20a-20d) ayant une section d'extrémité engageable par verrouillage dans un ensemble de serrage correspondant (22a-22d) situé sur l'un desdits plateau fixe et plateau mobile, chaque ensemble de serrage (22a-22d) ayant :
un ensemble de manchon rotatif (44a-44d) avec une surface interne dans laquelle est située une pluralité de premiers anneaux déplacés axialement de dents espacées circonférentiellement (48a), chaque premier anneau contenant une pluralité de dents séparées par des fentes alignées pour former des canaux à travers la pluralité de premiers anneaux de dents déplacés axialement, les premiers anneaux de dents étant agencés de manière sélective, lors de la rotation de l'ensemble rotatif, pour engager de manière positive une pluralité de seconds anneaux déplacés axialement de dents espacées circonférentiellement (38a, 39a) sur la section d'extrémité de chaque colonne de guidage (20a-20d), chaque second anneau contenant une pluralité de dents séparées par des fentes (40a) qui s'alignent au sein de la pluralité de seconds anneaux de dents déplacés axialement pour former des canaux axiaux à travers celle-ci, les premiers anneaux de dents étant en outre agencés lors de la rotation sélective de l'ensemble rotatif pour se désengager de ladite pluralité de seconds anneaux déplacés axialement de dents espacées (38a, 39a) pour permettre un mouvement axial relatif entre chaque colonne de guidage (20a-20d) et son ensemble de serrage respectif (22a-22d) en permettant aux dents dans les premiers anneaux (48a) de se déplacer à travers et à l'intérieur des fentes (40a) entre des dents dans les seconds anneaux (38a, 39a), moyennant quoi la colonne de guidage (20a-20d), en fonctionnement, passe à travers le manchon et est engagée par la rotation du manchon ;
dans laquelle :
un engagement positif se produit, en fonctionnement, entre la pluralité d'anneaux déplacés axialement à la fois sur la section d'extrémité et à l'intérieur de l'ensemble de manchon rotatif (44a-44d) ;
la pluralité d'anneaux de dents déplacés axialement (38a, 39a, 48a) est agencée pour supporter différentes distances entre plateau et coulisseau pour la machine de moulage par injection ; et
les anneaux de dents sont déplacés les uns par rapport aux autres par un pas ;
**caractérisée en ce que** :
l'ensemble de manchon rotatif (44a-44d, 48) est configuré comme un piston ayant une course disponible totale qui est au moins la somme : i) du pas ; ii) d'une mesure du jeu entre des anneaux de dents (38a, 39a, 48a) dans l'ensemble de manchon rotatif (44a-44d) et la colonne de guidage (20a-20d) ; et iii) d'un allongement maximum de la colonne de guidage (20a-20d) sous une force de serrage appliquée.

2. Machine de moulage par injection selon la revendication 1, dans laquelle le piston a une partie de gorge (52a) d'un diamètre extérieur relativement petit et une partie de base (50a) d'un diamètre extérieur relativement important, la partie de gorge (52a) étant couplée à la partie de base par une zone de transition (59a) et dans laquelle une surface interne du piston, juxtaposée en fonctionnement à ladite colonne de guidage respective, supporte lesdits premiers anneaux de dents espacées, la partie de base (50a) ayant :
une première surface transversale axialement (62a), située de manière adjacente à la zone de transition (59a), agencée pour supporter, en fonctionnement, une pression de fermeture de moule provenant d'un fluide pressurisé appliqué de manière incidente sur celle-ci ; et
une seconde surface transversale axialement (67a), située vers une extrémité de la partie de base (50a) plus à l'écart de la partie de gorge (52a) que de la zone de transition (59a), agencée pour supporter, en fonctionnement, une force de rupture de moule générée, en fonctionnement, par un fluide pressurisé appliqué de manière incidente sur celle-ci.

3. Machine de moulage par injection (10) selon la revendication 2, dans laquelle chaque ensemble de serrage (22a-22d) est situé à l'intérieur d'un alésage dans un plateau, l'alésage coopérant avec le piston (44a-44d) pour définir :
une première cavité (66a) définie par la première surface transversale axialement (62a) et la zone de transition (59a) ; et
une seconde cavité (65a) adjacente à la seconde surface transversale axialement (67a).

4. Machine de moulage par injection (10) selon la revendication 1, comprenant en outre un ensemble de piston (70, 71, 73) et au moins un bras de liaison associé (80, 84) couplés à au moins deux ensembles de serrage (22a-22d), le bras de liaison (80, 84) coopérant avec l'ensemble de piston (70, 71, 73) pour provoquer, en fonctionnement, la rotation du manchon pour engager et désengager les anneaux de dents espacées de la section d'extrémité et de l'ensemble rotatif.

5. Machine de moulage par injection (10) selon la revendication 4, dans laquelle l'ensemble de piston (70, 71, 73) et ledit au moins un bras de liaison associé (80, 84) synchronisent une pluralité d'ensembles de serrage simultanément.

6. Machine de moulage par injection (10) selon l'une quelconque des revendications précédentes, dans laquelle un espace entre des anneaux de dents adjacents est plus grand qu'une largeur d'un anneau de dents qui tient à l'intérieur de cet espace.

7. Machine de moulage par injection (10) selon l'une quelconque des revendications précédentes, comprenant en outre un mécanisme servant à générer et acheminer une pression vers le moule durant le moulage par injection, le mécanisme étant actif en réponse à un engagement positif du premier anneau de dents espacées avec le second anneau de dents espacées.

8. Machine de moulage par injection selon l'une quelconque des revendications précédentes, dans laquelle la machine de moulage par injection est une machine tandem supportant une pluralité de moules.
